Europäisches Patentamt

European Patent Office

Office européen des brevets

(11) Publication number: **0 373 421**
**A2**

## (12) EUROPEAN PATENT APPLICATION

(21) Application number: **89122035.2**

(51) Int. Cl.⁵: **G01V 3/08, G01V 1/00**

(22) Date of filing: **29.11.89**

(30) Priority: **01.12.88 IT 2281188**

(43) Date of publication of application:
**20.06.90 Bulletin 90/25**

(84) Designated Contracting States:
**AT BE CH DE ES FR GB GR IT LI LU NL SE**

(71) Applicant: **Petessi, Mabella**
**Via Marescalchi, 30**
**I-48018 Faenza (Ravenna)(IT)**

(72) Inventor: **Petessi, Mabella**
**Via Marescalchi, 30**
**I-48018 Faenza (Ravenna)(IT)**

(74) Representative: **Gervasi, Gemma et al**
**NOTARBARTOLO & GERVASI Srl Viale**
**Bianca Maria 33**
**I-20122 Milan(IT)**

(54) **Method and apparatus for forcasting seismic events.**

(57) The present invention refers to a method and to an apparatus for forecasting seismic events.

The apparatus consists of an electric atmospheric polarimeter, while the method is based on the measurement and registration of the daily variations of the electric polarization of a siliceous dielectric, which are brought about by variations in the density of atmospheric electric charges, and allows to establish the magnitude, the epicenter as well as the time of the event.

FIg. 1

## Method and apparatus for forecasting seismic events

Prior Cognitions Art

It is known (see M. Petessi "Planetary Vortices, Solar Activity and Seismogenesis" Icaro, March, 1986) that seismogenetic, exogenous processes are induced by magnetospheric variations on a planetary scale of the electric charges concentration, which is apt to considerably and abruptly increase the seismic instability of any zone of the earth surface.

In the lower atmospheric strata as well as in the troposphere, the introflexion of the electric charges toward the ground, which may be magnified by intense atmospheric compressions, produces in succession: local increments in the density of the electric charges and in the electric polarization induced in the ground in relation to its local geological nature; formation in the ground of electric currents variable with time in their intensity and direction, accompanied by spatial magnetic field gradients; these bring about deformation tensions which may create the premises for an earthquake or accelerate its happening in the presence of a critical geodynamic situation.

It is thus evident that a tracking and registration of electric polarization variations induced in grounds of a certain geological nature would be very important to the end of forecasting seismic events.

It is evident, on the other hand, that a direct tracking of these variations in the ground would be extremely difficult and probably impossible.

Summary of the Invention

We now have found that, by means of an electric atmospheric polarimeter, it is possible to establish location, magnitude and date of a seismic event in advance of its happening, by means of daily registrations, in a pre-seismic phase, of the variations in the electric polarization in a siliceous dielectric by effect of the variation of the density of the atmospheric electric charges.

Said polarimeter consists of a plate of a siliceous material inserted between two plates of an electricity conducting material, which substantially cover the dielectric surface so as to leave only a minor portion of the dielectric material in contact with the atmosphere.

An electric field of known value is applied between the two electricity conducting plates, which value adds to the value of the natural atmospheric field, so that from the value of the registered electric polarization the atmospheric component may be directly calculated.

A slightly modified polarimeter of that type may be connected with an ohmic circuit which increases its sensitivity and puts in evidence the sign of the pre-seismic electric atmospheric charge.

The method of the present invention consists, therefore, in registering the electric polarization variations in a siliceous dielectric partly exposed to the atmosphere and in elaborating the obtained data for forecasting seismic events.

Details of the invention

The apparatus, according to the present invention, which consists essentially of an atmospheric electric polarimeter, and its application to the precasting of seismic events will now be illustrated in detail with reference to the enclosed figures.

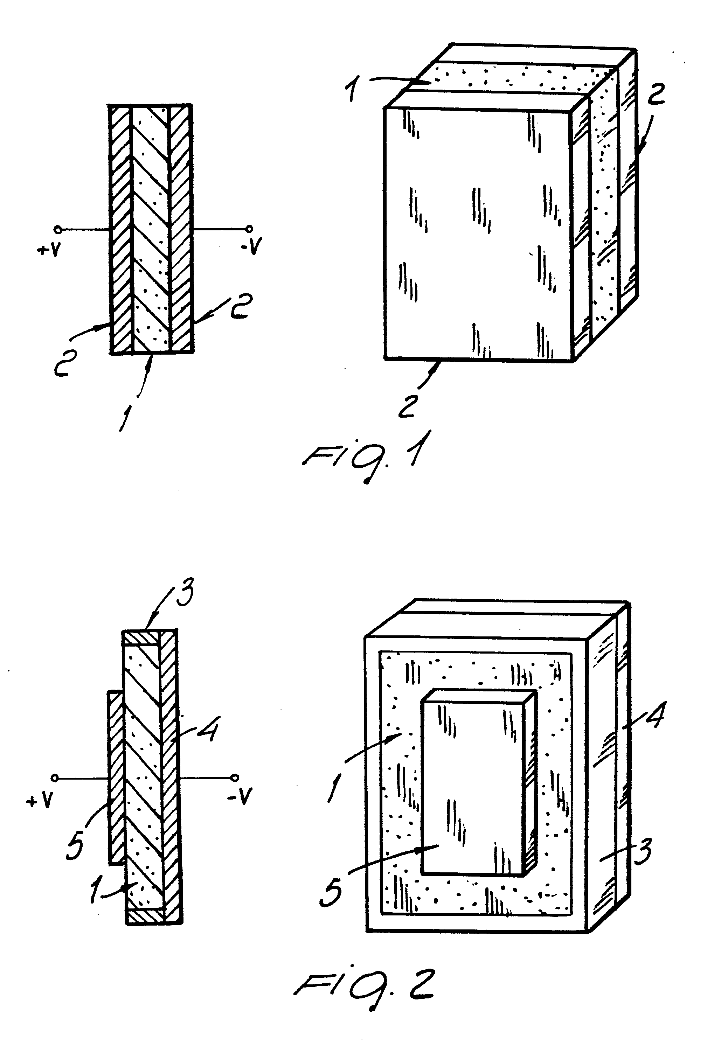

Figure 1 shows schematically an example of the apparatus, which consists essentially of a capacitor, provided with a dielectric 1 consisting of a siliceous material inserted between two plates of an electricity conducting metal 2, the larger sides of which have a surface equal to or larger than the ones of the dielectric. The part of the dielectric surface corresponding to the four smaller sides is thus exposed to the atmosphere. The percentage of the dielectric surface exposed should not be larger than 20-30%. In this version the electric fields applied, the one known and the atmospheric one, are perpendicular to each other.

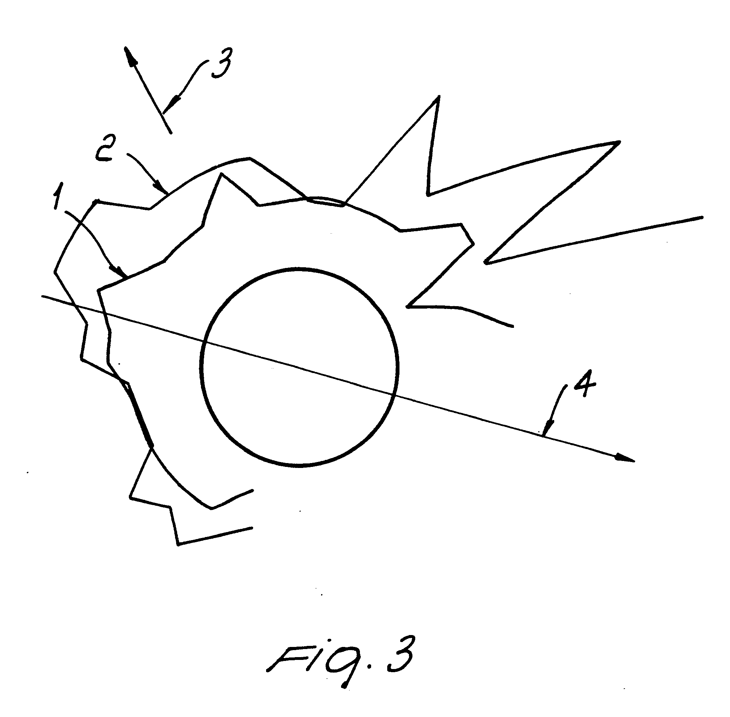

Figure 2 shows schematically another version of the apparatus, in which the dielectric material 1 is also inserted between two metal plates 4 and 5 but it is surrounded by electrically non polarizable material 3 on the four smaller sides, while the metal plates 4 and 5 cover respectively the rear side totally and the front side partially.

The ratio between exposed and non-exposed surface of the dielectric is again 20-30%. In this version,

2

the two applied electric fields are parallel to each other; in this way one can totally exploit the additional interference effect of the atmospheric electric field. The exposed dielectric surface is limited, as said, in both cases in order to avoid negative effects on the measurement results by variations in the environment humidity and temperature. Water vapor condensed on the dielectric can in fact create layers of high electric conductivity, which will constitute preferred current passages, thus greatly influencing the dielectric polarization. On the other hand, sudden, large changes in the dielectric temperature may cause expansions and compressions, thereby modifying the molecular structure, indipendently of the effect of the variations in the atmospheric electric charges.

As a dielectric, one can simply use glass or a common, easily available silicate, whose basic molecule, $SiO_2$, is the same present everywhere on the earth crust in chemical combination with other substances. The variations with time of the electric polarization in said dielectric are thus wholly similar to the ones induced in the ground by same causes.

For the measurement and registration of the variations with time of the atmospheric electric polarization and the ensuing application to the forecasting of seismic events, one proceeds as follows.

To the two plates a known potential difference is applied, which must be low enough so as not to create molecular deformations which would mask the ones induced by the atmosphere. The potential difference to be applied should be correlated to the dielectric constant and the dimensions of the employed dielectric.

According to the present invention, a glass dielectric may have a thickness of 5 to 20 mm and a surface of the larger sides of 25 to 80 $cm^2$, and to the metal plates a potential difference of between 0.5 and 2 V may be applied.

In the registration of the variation with time of the atmospheric electric potential, one must take into account, with a parallel registration, the atmospheric pressure, in order to eliminate variations which may be attributed to changes in the altitude of the charges, thus isolating those actually due to changes in the electric charge density.

The method consists essentially in measuring the electric capacity of the device when a potential difference is applied.

The difference between the theoretical capacity resulting from the dielectric dimensions and its dielectric constant, and the experimental one, will measure the extra polarization induced by the environment atmosphere.

From the value of said difference one can calculate the energy of the induced atmospheric polarization and the number of polarized molecules present in the substance. The registration of the variations in the electric capacity of the device will allow, as said the use of the method and of the apparatus of the present invention as a system for the forecasting of seismic events.

In fact, in the days preceding an earthquake (between five and twenty days) one can register, with this device, over the daily 24 hours, variations in capacity of a total amplitude proportional to the magnitude of the seismic event in preparation and variations in shape directly depending on the distance between the site of the device and the epicentric position.

Furthermore, from the position of maxima and minima on the daily curve, one can deduce the hour on which the earthquake will take place.

In fact, the registration obtained by means of this device reflects the wholly analogous polarization process which takes place in the ground, which is equally induced by the distribution of charges in the atmosphere.

On the basis of the geological composition of the ground it will then be possible to determine the density of the polarization induced therein and the density of the associated energy.

These last parameters allow to calculate the time necessary for the changes induced by molecular deformation to lead to an accumulation of deformation tensions along local fractures and faults, up to the fracture treshold and to the earthquake.

More precisely, the registration will allow to establish:

A. Location of the seismic event;

L - Longitude of the event determined on the basis of the maximum polarization moment on the curve which indicates the daily planetary configuration of electric charges with respect to the axis of the galactic particles flux. It has to be calculated for at least a couple of stations situated on a same latitude.

1 - Latitude of the event: derives from the determination of the minimum daily polarization gradient with reference to the particular configuration involved.

It has to be calculated around the meridian defined by $L_0$, in the area indicated by the shape of the curve defining the value $(1_{obs} - 1_o) \gtrless 0$, and precisely.

where $1_{obs}$ is the latitude on which the observatory is situated.

In order to obtain the necessary definition of 1 a number of stations distribuited on latitude rather than on longitude is required.

B. Energy of the event:

$E_0$ : This is associated with the value of the atmospheric induced 8 polarization and can be obtained from the difference of the experimental values which the capacity can assume over a 24 hour period.

It is measured in erg/cm$^3$ and it is thus referred to the daily polarization gradient.

One should note that with this method the energy involved in the seismogenetic process is exactly taken into account.

This is different from the empirical values derived "a posteriori", as indicated for istance by the Mercalli and Richter scales, which are the most known and normally used, and which have reference only to the external, destructive consequences of the quake.

C- Time of the event : here two definitions may be considered:

A) determination of the time $T_0$ in days, elapsing between the start of the registered energy increment and the event. This depends on the geological characteristics of the ground, which define its characteristic reaction time and on the intrinsic geodynamic conditions.

From the experiments carried out, one can conclude that this varies in general between 5 and 20 days.

B) definition of the hour $t_0$ of maximum probability of the event. This second time parameter depends on the sidereal hourly position of $L_0$. Also in this case it is necessary to analyze the data of at least two stations on a same latitude.

Figure 3 gives an example of registration by means of the devices of figures 1 and 2. Both devices operated with a dielectric made of glass, which, in the case of the device of figure 2, was partially shielded by wood.

In the device of figure 1 the total dielectric surface was 128 cm$^2$ and the exposed surface 28 cm$^2$, while in figure 2 the dielectric had a total surface of 196 cm$^2$, the exposed one being of 48 cm$^2$.

The metal plates were made of aluminum and the difference in potential applied between the two metal plates was 1.5 V. In figure 3, 1 and 2 indicate respectively the registrations made with the devices of figure 1 and figure 2, while 3 indicates the sun direction and 4 the direction of the particles galactic flux.

The obtained curves represent the same section, at the latitude of about 46°, of the planetery atmospheric configuration of polarizing electric charges, obtained, however, with different sensitivity.

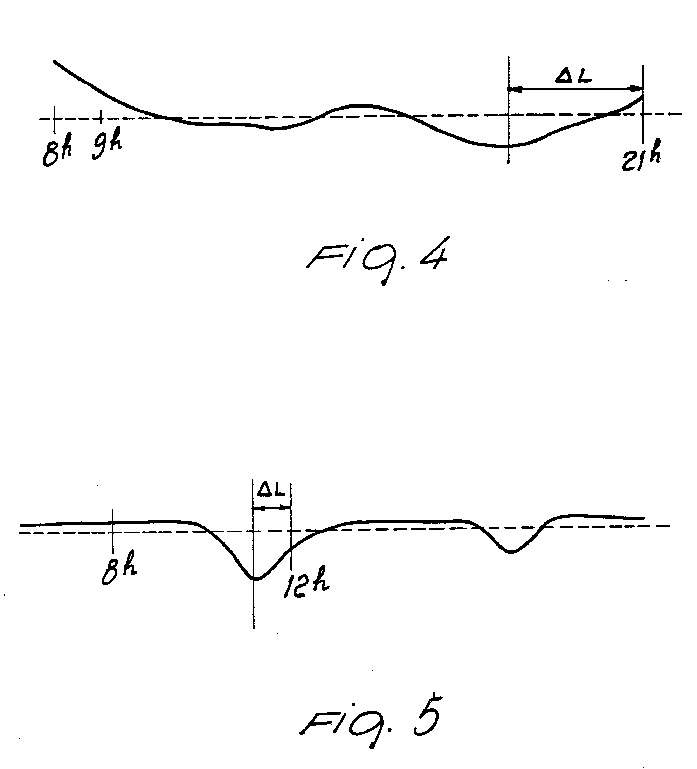

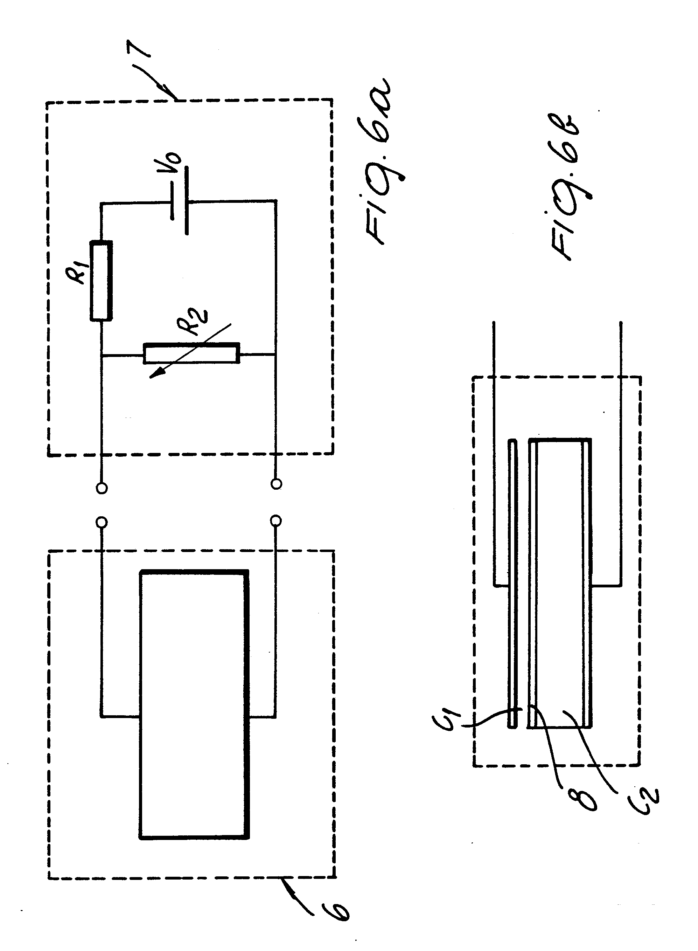

Figure 4 and 5 represent the daily registrations of the capacity charges, with respect to the galactic flux

4

axis, in two periods preceding seismic events.

Operating with only one station for obtaining data to be analyzed, incertainties in the exactitude of the determination of the sought for seismic parameters, that is location, energy and date of the event, are encountered.

For example, a distance between foreseen and actual location of 25-50 km can occur.

Operating with a network of control stations, however, it is possible to exactly "triangulate" the location of the event, beside defining the median associated polarization energy and the rate of daily variation as a function of the location of the station (that is to define the isoseists) and, from the knowledge of the geology of the ground of the thus established location, it will be possible to figure exactly the typical time of response by the ground and thus the day of the event.

The minimal energy variation to which the device according to the present variation is sensitive is of $7.5 \times 10^{-8}$ erg/cm$^3$ while the field of measurable energy is comprised between $3.8 \times 10^{-6}$ which is the background level, and $5.14 \times 10^{-6}$ erg/cm$^3$.

A particular embodiment of the atmospheric electric polarimeter of fig. 1 is represented in fig. 6b. In said figure the polarimeter is made out of two capacitors connected in series, one with air ($C_1$) as a dielectric and the other with a glass ($C_2$)dielectric.

Between the two dielectrics a third plate, of copper, 8, is inserted, which has a thickness of 2 mm.

The new polarimeter is then connected to a ohmic circuit and this ensemble allows to increase the sensitivity of the polarimeter of fig. 1 and to detect the sign of the atmosphric electric charge.

This embodiment is represented in fig. 6a, where 6 indicates the polarimeter in its new double capacity configuration (see fig. 6b) and 7 the ohmic circuit.

The system in this embodiment results in a electro-seismic detector in which the polarimeters represents the main electric antenna while the ohmic circuit, which comprises as resistive elements two small graphite cylinders ($R_1$ and $R_2$), is employed as secondary electric reference antenna.

The electric behavior of the ohmic circuit with respect to the atmospheric ionization is different from the behavior of the polarimeter, and precisely, while the polarimeter, as a dielectric, responds in terms of molecular polarization, the ohmic circuit, as semi-conductor, responds prevailingly in terms of electric conductivity presenting instanteneous resistance values which vary with time. The introduction of graphite in the ohmic circuit has therefore the main function of applying to the polarimeter a reference voltage ($V_{R_2}$) variable with time in a measurable way, thus maintaining a constant molecular mobility in the glass dielectric and increasing its sensitivity to variations in the atmospheric ionization.

This reference voltage is divided between the two capacitors in series and is modified by the variable ionization present in $C_1$.

To determine the atmospheric electric polarization, only the variation, positive or negative, induced on the tension is measured, which is present at the ends of $C_2$, with respect to the value which this should assume if insulated from the environment, equal to ($V_{R_2} \times C_1/C_1 + C_2$).

The electro-seismic detector in its new configuration presents a detection threshold approximately 250 times lower with respect to the use ofthe single polarimeter of fig. 1 and 2.

In the ohmic circuit, the resistivity elements $R_1$ and $R_2$ consist of small graphite cylinders having a diameter of 2 mm, and a length of, respectively, 36 and 12 cm, with a resistivity per unit of length of 1.7 $\Omega$/cm. The electric contacts at the graphite ends are of a capacitive type with an air dielectric of 0.3 mm thickness.

Preferably, one operates with a tension of 4.5 V, while the $V_{R_2}$ values are maintained on the average equal to 550 mV, being autonomously variable by atmospheric induction.

## Claims

1. Apparatus for the forecasting of seismic events, consisting of an atmospheric, electric polarimeter and characterized by comprising a plate of a siliceous dielectric material inserted between two plates of an electricity conducting material which cover most of the surface of it, so that only a minor portion of the dielectric surface is in contact with the atmosphere, electric field of known value being applied between said plates of electricity conducting material, which electric field adds itself to the natural atmospheric field in such a way that, from the electric polarization value of the dielectric, one can directly calculate the atmospheric component, said polarimeter being connectable with a ohmic circuit which increases its sensitivity.

2. Apparatus according to claim 1, characterized in that the larger faces of said plates of an electricity enducting material (2) have a surface equal to or larger than the surface of the larger faces of the plate of siliceous material (1) so that only the surface of the plate of siliceous material corresponding to its four smaller faces remains exposed to the atmosphere.

3. Apparatus according to claim 1, characterized in that said siliceous material (1) is surrounded on its four smaller sides by electrically non-polarizable material (3) while the plates of teh electricity conducting material (4) and (5) cover respectively its rear side totally and its front side partially.

4. Apparatus according to claim 1, characterized in that the surface of said siliceous material exposed to the atmosphere amounts to between 20 and 30 % of the surface of same not exposed to the atmosphere.

5. Apparatus according to claim 1, characterized in that said siliceous material is a silicate.

6. Apparatus according to claim 1, characterized in that said siliceous material is a glass.

7. Apparatus according to claim 1, characterized in that the siliceous material consists of glass having a thickness of between 5 and 20 mm, and an area of its larger faces of between 25 and 80 $cm^2$.

8. Apparatus according to claim 1, characterized in that between said plates of electricity conducting material a difference of potential of between 0.5 and 2V is applied.

9. Apparatus according to claim 1, characterized in that the polarimeter is divided in two capacitors connected in series, one having air as dielectric ($C_1$) and the other a glass dielectric ($C_2$).

10. Apparatus according to claim 1, characterized in that said ohmic circuit 7 comprises as resistivity elements two small graphite cylinders ($R_1$) and ($R_2$).

11. Apparatus according to claim 10, characterized in that said graphite cylinders ($R_1$) and ($R_2$) have a 2 mm diameter, a length of respectively 30 cm and 12 cm and a resistivity per unit of length of 1.7 $\Omega$/cm.

12. Apparatus according to claim 10 characterized in that a tension of 4.5 V is applied to said ohmic circuit (7).

13. Method for the forecasting of seismic events, characterized in that a registration is made daily, in the pre-seismic phase, of the electric polarization variation in a siliceous dielectric material, said variation being a result of the variation of density of the electric atmospheric charges, and that, from the obtained registration, longitude, latitude, energy and time of the seismic event are defined.

14. Method according to claim 13, characterized in that the longitudine of the seismic event is determined on the basis of the moment of maximum polarization.

15. Method according to claim 13, characterized in that the latitude of the seismic event is determined on the basis of the minimum daily polarization gradient.

16. Method according to claim 13, characterized in that the energy of the seismic event is associated with the value of the induced atmospheric polarization.

17. Method according to claim 13, characterized in that the time in days of the seismic event is determined starting from the beginning of the process defined by the registered energy increase, on the basis of the geological characteristics of the ground and of the intrinsic geodynamic conditions.

18. Method according to claim 13, characterized in that the hour of maximum probability of the seismic event is defined on the basis of sidereal hourly position of the longitude of the event.

Fig. 1

Fig. 2

Fig. 3

Fig. 4

Fig. 5

Fig.6a

Fig.6b